# EUROPEAN PATENT APPLICATION

(11) **EP 2 865 736 A1**
(43) Date of publication of application: **29.04.2015**
(21) Application number: 14460074.9
(22) Date of filing: 22.10.2014
(51) Int. Cl.: C10L 5/36, C10L 5/40, C10L 5/44, C10L 5/46, C10L 5/48

(54) **Solid fuel, particularly for the power industry, and method of manufacture thereof**

(30) Priority: 22.10.2013 PL 40573013
(71) Applicant: Tkacz, Elzbieta, 00-661 Warszawa (PL); Tonderski, Krzysztof, 03-285 Warszawa (PL); Pakosz, Aleksandra, 41-907 Bytom (PL)
(72) Inventor: Tkacz, Elzbieta, 00-661 Warszawa (PL); Tonderski, Krzysztof, 03-285 Warszawa (PL); Pakosz, Aleksandra, 41-907 Bytom (PL)
(74) Representative: Szczepanska, Krystyna

(57) **Abstract**

Solid fuel, particularly for the power industry, according to the invention, contains a mixture of up to 80 wt% of selected biodegradable municipal and/or industrial waste of fibrous materials from natural textiles and fibres, up to 80 wt% of selected municipal and/or industrial waste of cellulose products, 10-30 wt% of sifted stabilized fractions of biodegradable waste, 5-15 wt% of biodegradable phytomass waste from farming, preferably straw, 10-30 wt% of waste from hydroponic farming. Additionally it contains 0-50 wt% of dust from milling all types of cereals and/or 30-50 wt% of dust from brewing industry and/or 0-10 wt% of dried fruit and/or dried flowers and/or dried vegetables past their expiration date and/or 5-15 wt% of substrate from mushroom growing and/or up to 25 wt% of pomace and other waste from plant produce processing and/or 5-8 wt% of tobacco waste and/or up to 5 wt% of cork waste. Another object of the invention is a method of manufacture of solid fuel, particularly for the power industry.

## Description

The present invention relates to a solid fuel, particularly for the power industry, and method of manufacture thereof exclusively from selected biodegradable waste materials, which are deposited in large quantities in municipal landfills and constitute an environmental problem, the said fuel providing energy input for boilers of various types used by the power and heat generation industry, as well as for boilers used for heating residential houses and public buildings, at high heat content and low content of sulphur compounds and ash during combustion in boilers.

Modem civilization generates vast quantities of various wastes, the disposal of which is a growing problem. Huge quantities of municipal waste are generated in urbanized areas, and its disposal is becoming an increasingly pressing problem. Municipal waste comprises mainly food waste of vegetable origin, food waste of animal origin, paper waste, cardboard waste, plastic waste, textile waste, glass waste, metal waste and other mineral waste. Deposition of municipal waste takes up large areas of land, particularly around towns and cities, causes environmental nuisance and is very expensive.

An environmental problem of these landfills are the stabilized fractions of biodegradable waste that contain many constituents harmful to human health. Very large quantities of waste are generated by the paper industry, textile industry and related industries, brewing industry, grain mills, vegetable and fruit processing industry, herb industry, tobacco industry.

Large quantities of waste are constituted by phytomass waste from farming, waste in the form of pomace and other residues from plant produce processing.

The Polish patent specification 176529 teaches of an industrial power fuel formed of a blend of waste fuels containing up to 80 wt% of coal slurries and up to 60 % of organic fibre waste or up to 30 wt, of refinery waste, less than 0.3 wt% of filtration waste from wastewater treatment plant and 2.5 wt% of liquid soap or starch and up to 1.5 wt% glycol, wherein the fuel that contains refinery waste also contains up to 20 wt% of milk of lime.

The Polish patent specification 204081 describes a method of obtaining biomass for the manufacture of fuel using biodegradable fractions of farming products, waste and residues, vegetable and animal waste from forestry and related industries, the said method consisting in mixing biomass of 1-90% moisture content with calcium compounds, preferably with highly reactive calcium oxide in the quantity of 0.5 to 10%, most preferably 10% in relation to dry matter content, the biomass then being subjected to a process of agglomerating.

The Polish patent specification 206204 describes a fuel for boilers, particularly for fluidized bed boilers, and a method of manufacture thereof. This fuel comprises an aerobically fermented mixture of one part by weight of dewatered sludge from wastewater treatment plant with dry matter content of 10 to 50 wt% and 0.5 to 10 parts by weight of solid biological waste. The biological waste is at least one of the waste materials selected from a group comprising mowed grass, hay, tree cuttings, leaves, shavings, rapeseed straw or other biological waste from agricultural plant produce, with the exception of cereal straw, or a mixture thereof. The method consists in mixing one part by weight of dewatered sludge from wastewater treatment plant with dry matter content of 10 to 50 wt%, with 0.5 to 10 parts by weight of solid biological waste, followed by subjecting the mixture to aerobic fermentation for 6 to 8 days or by carrying out the fermentation in a controlled manner for 2 to 4 days. Upon mixing all components, the fuel is granulated in a rotating granulator.

Polish patent application P-303083 discloses a solid fuel, particularly one containing waste materials. The solid fuel comprises a mixture of a power medium, which optionally acts as a binder or carrier, wherein the quantity of carrier in the fuel is at least 10 vol%. The power medium comprises a size-reduced, preferably down to maximum particle size of 5 mm, selected plastic or a mixture of plastics. The plastics used include polyethylene and/or polypropylene and/or polystyrene and/or polyethyleneterephthalate. The carrier used is preferably size-reduced waste of vegetable origin and/or pumice and/or ash and/or slag. The carrier preferably also contains components that react with noxious gases and it may also include small admixture of a flammable substance.

Polish patent application P-381786 describes an alternative fuel and method of manufacture thereof from sewage sludge and selected fractions of municipal waste, said fuel consisting of 25% to 50% of dewatered sewage sludge with moisture content of ca. 80%, 10-20% of separated fractions of municipal waste of organic nature, and 50-75% of biomass in the form of rapeseed straw and/or sawdust and/or shavings. The method of manufacture of the alternative fuel consists in mixing the pre-dried sludge dewatered in the process of wastewater treatment and size-reduced fractions of organic waste separated from municipal waste with a second size-reduced biomass product. The mixture is pre-dried, ground and subjected to further evaporation. The obtained homogenous powdery mass is granulated and cooled rapidly.

Polish patent application P-402910 discloses a method of manufacturing a secondary solid biomass fuel from paper industry waste wherein a mixture of 20-70% of slurries from de-inking of waste paper, said slurries containing cellulose fibres, printing inks, glues and fillers, 10-30% of fibrous wastewater, fibre waste, slurries containing fibres, fillers and coatings from mechanical separation, and 30-70% of sewage sludges from paper mill wastewater treatment plants is stirred and dewatered to water content below 30% and heat content 8-12 MJ/kg, and optionally additives or components that increase biomass and heat content are added. The material obtained may be formed into pellets or briquettes.

The object of the present invention is to provide a solid fuel, particularly for the power industry, for boilers of various types, suitable as an energy input for boilers in both the power industry as well as heat generating industry, for boilers used for heating residential houses and public buildings, the basic components of said fuel being exclusively selected biodegradable waste, both municipal and industrial waste, and phytomass waste of various kind, enabling thereby processing of large quantities of various waste deposited in landfills and generated by the various industries, and at the same time obtaining a fuel of high heat content and low content of ash and sulphur compounds during combustion thereof in boilers.

The solid fuel, particularly for the power industry, from selected biodegradable municipal and/or industrial waste of fibrous materials from natural textiles and fibres, selected municipal and/or industrial waste of cellulose products, stabilized fractions of biodegradable waste, biodegradable phytomass waste and/or waste from plant produce processing according to the invention contains a mixture of up to 80 wt% of selected biodegradable municipal and/or industrial waste of fibrous materials from natural textiles and fibres, up to 80 wt% of selected municipal and/or industrial waste of cellulose products, 10-30 wt% of sifted stabilized fractions of biodegradable waste, 5-15 wt% of biodegradable phytomass waste from farming, preferably straw, 10-30 wt% of waste from hydroponic farming.

Preferably the fuel additionally contains 0-50 wt% of dust from milling all types of cereals and/or 30-50 wt% of dust from brewing industry and/or 0-10 wt% of dried fruit and/or dried flowers and/or dried vegetables past their expiration date and/or 5-15 wt% of substrate from mushroom growing and/or up to 25 wt% of pomace and other waste from plant produce processing and/or 5-8 wt% of tobacco waste and/or up to 5 wt% of cork waste. The selected biodegradable municipal waste from mechanical processing of mixed municipal waste and/or industrial cellulose products contain waste from screening, from mechanical processing of paper, cardboard, paper and cardboard packaging, preferably not containing contaminants in the form of printing ink, impregnants.

Method of manufacture of solid fuel, particularly for the power industry, according to the invention is characterized by that up to 80 wt% of selected biodegradable municipal and/or industrial waste of fibrous materials from natural textiles and fibres, up to 80 wt% of selected municipal and/or industrial waste of cellulose products, 5-15 wt% of biodegradable phytomass waste from farming, preferably straw, 10-30 wt% of waste from hydroponic farming and/or 0-10 wt% of dried fruit and/or dried flowers and/or dried vegetables past their expiration date and/or up to 25 wt% of substrate from mushroom growing and/or 5-8 wt% of tobacco waste and/or up to 5 wt% of cork waste and/or up to 25 wt% of pomace and other waste from plant produce processing is subjected to mixing and size reduction, preferably down to 0.1 - 30 mm, and drying in a high-speed mill; this is followed by adding to the thus obtained size-reduced mixture of biodegradable components placed in a milling and drying device 10-30 wt% of sifted stabilized fractions of biodegradable waste and/or 0-50 wt% of dust from milling of all types of cereals, and/or 30-50 wt% of dust from brewing industry and the whole composition is subjected to further mixing, drying, preferably to 11 - 12 % moisture content, and size reduction, preferably to grain size of 0.1 to 10 mm, until a homogenous mixture is obtained. The obtained product is, depending on the type of boiler where the fuel is to be used, subjected to the process of forming pellets or briquettes without adding any additional binders.

Solid fuel, particularly for the power industry, according to the invention comprises a fuel obtained exclusively from various selected biodegradable fractions of municipal and/or industrial waste of cellulose products, from selected waste of fibrous materials from natural textiles and fibres, from various types of phytomass waste, particularly from farming, from waste generated in large quantities in the brewing industry, in mills of various types of cereals, from waste from hydroponic farming, from tobacco waste, from sifted stabilized fractions of biodegradable waste that constitutes a serious environmental issue in landfill sites for various types of waste.

The method and solid fuel according to the invention enable utilization of enormous quantities of waste of various types in the manufacture of fuel, which due to its composition is characterized by high heat content in the order of 18.4 GJ/kg °C as received and in the order of 19.3 GJ/kg °C dry basis, and by sulphur compounds content lower than permissible limits, and by low ash content in combustion process in the order of 2.3 %.

This fuel is obtained exclusively from various selected types of biodegradable waste materials without the use of any conventional fuels such as hard coal or lignite. It may be obtained in powdery form or in the form of briquettes or pellets of the size adapted to user needs.

The type of waste making up the fuel according to the invention enables continuous manufacture of the fuel near the site where the fuel is used, enables reduction of the area occupied by landfills and utilization of many types of noxious and useless constituents generated during milling of cereals, in the brewing industry, in the herb industry, forming waste. A serious environmental problem of landfills containing these wastes are the stabilized fractions of biodegradable waste. The method and fuel according to the invention enable utilization of waste fractions that are troublesome for all waste sorting plants and at the same time enable avoiding heavy penalties for improper waste management.

The subject of the invention is illustrated in the following example embodiments.

### Example I.

The following materials are subjected to mixing and size reduction, preferably down to 0.1 - 30 mm, and drying in a high-speed mill:

| | |
|---|---|
| Selected biodegradable municipal and industrial waste of fibrous materials from natural textiles and fibres in the quantity of | 10 wt% |
| Selected biodegradable municipal and/or industrial waste of cellulose products in the quantity of | 20 wt% |
| Biodegradable waste from farming - straw chaff in the quantity of | 7 wt% |
| Waste from hydroponic farming in the quantity of | 10 wt% |
| Substrate from mushroom (champignons) growing in the quantity of | 5 wt%. |

The following materials are added to the obtained size-reduced mixture of components placed in a milling and drying device:

| | |
|---|---|
| Sifted stabilized fractions of biodegradable waste in the quantity of | 18 wt%. |

The whole composition is further mixed, dried preferably to 11-12% moisture content and size-reduced preferably to grain size of 0.1-10 mm. After a homogenous mixture is obtained the obtained product is, if necessary, depending on the type of boiler where the fuel is to be used, subjected to the process of forming pellets or briquettes without the use of any additional binders.

### Example II.

The following materials are subjected to mixing and size reduction, preferably down to 0.1 - 30 mm, and drying in a high-speed mill:

| | |
|---|---|
| Selected biodegradable municipal and/or industrial waste of fibrous materials from natural textiles and fibres in the quantity of | 10 wt% |
| Selected biodegradable municipal and industrial waste of cellulose products in the quantity of | 25 wt% |
| Biodegradable waste from farming - straw chaff in the quantity of | 5 wt% |
| Waste from hydroponic farming in the quantity of | 15 wt% |
| Dried fruit and flowers past their expiration date in the quantity of | 2 wt% |

The following materials are added to the obtained size-reduced mixture of components placed in a milling and drying device:

| | |
|---|---|
| Dust from brewing industry in the quantity of | 30 wt% |
| Sifted stabilized fractions of biodegradable waste in the quantity of | 13 wt%. |

The whole composition is further mixed, dried preferably to 11-12% moisture content and size-reduced preferably to grain size of 0.1-10 mm. After a homogenous mixture is obtained, the obtained product is, if necessary, depending on the type of boiler where the fuel is to be used, subjected to the process of forming pellets or briquettes without adding any additional binders.

### Example III.

The following materials are subjected to mixing and size reduction, preferably down to 0.1 - 30 mm, and drying in a high-speed mill:

| | |
|---|---|
| Selected biodegradable municipal and industrial waste of fibrous materials from natural textiles and fibres in the quantity of | 20 wt% |
| Selected biodegradable municipal and industrial waste of cellulose products in the quantity of | 10 wt% |
| Biodegradable waste from farming - straw chaff in the quantity of | 10 wt% |
| Waste from hydroponic farming in the quantity of | 10 wt%. |
| The following materials are added to the obtained size-reduced mixture of components placed in a milling and drying device: | |
| Dust from brewing industry in the quantity of | 30 wt% |
| Dust from milling of various available types of cereals in the quantity of | 10 wt% |
| Sifted stabilized fractions of biodegradable waste in the quantity of | 10 wt%. |

The whole composition is further mixed, size-reduced, dried and further processed as in Example I.

### Example IV.

The following materials are subjected to mixing and size reduction, preferably down to 0.1 - 30 mm, and drying in a high-speed mill:

| | |
|---|---|
| Selected biodegradable industrial waste of fibrous materials from natural textiles and fibres in the quantity of | 15 wt% |
| Selected biodegradable municipal and industrial waste of cellulose products in the quantity of | 20 wt% |
| Biodegradable waste from farming - straw chaff in the quantity of | 7 wt% |
| Waste from hydroponic farming in the quantity of | 20 wt% |
| Substrate from mushroom growing in the quantity of | 5 wt% |
| Tobacco waste in the quantity of | 5 wt% |
| Pomace and other waste from plant produce processing in the quantity of | 11 wt% |
| Dried fruit, flowers and vegetables past their expiration date in the quantity of | 2 wt%. |

The following materials are added to the obtained size-reduced mixture of components placed in a milling and drying device:
Sifted stabilized fractions of biodegradable waste in the quantity of 20 wt%.

The whole composition is further mixed, size-reduced, dried and further processed as in Example I.

### Example V.

The following materials are subjected to mixing and size reduction, preferably down to 0.1 - 30 mm, and drying in a high-speed mill:

| | |
|---|---|
| Selected biodegradable municipal and industrial waste of fibrous materials from natural textiles and fibres in the quantity of | 15 wt% |
| Selected biodegradable municipal waste of cellulose products in the quantity of | 15 wt% |
| Biodegradable waste from forestry - straw chaff in the quantity of | 10 wt% |
| Waste from hydroponic farming in the quantity of | 20 wt% |
| Substrate from mushroom (champignons) growing in the quantity of | 5 wt% |
| Dried fruit,flowers and vegetables past their expiration date in the quantity of | 5 wt% |
| Cork waste in the quantity of | 1 wt% |
| Pomace and other waste from plant produce processing in the quantity of | 10 wt%. |

The following materials are added to the obtained size-reduced mixture of components placed in a milling and drying device:

| | |
|---|---|
| Dust from milling of various available types of cereals in the quantity of | 9 wt% |
| Sifted stabilized fractions of biodegradable waste in the quantity of | 10 wt%. |

The whole composition is further mixed, size-reduced, dried and further processed as in Example 1.

## Claims

1. Solid fuel. particularly for the power industry, from selected biodegradable municipal and/or industrial waste of fibrous materials from natural textiles and fibres, selected municipal and/or industrial waste of cellulose products, stabilized fractions of biodegradable waste, biodegradable phytomass waste and/or waste from plant produce processing, **characterized in that** it contains a mixture of up to 80 wt% of selected biodegradable municipal and/or industrial waste of fibrous materials from natural textiles and fibres, up to 80 wt% of selected municipal and/or industrial waste of cellulose products, 10-30 wt% of sifted stabilized fractions of biodegradable waste, 5-15 wt% of biodegradable phytomass waste from farming, preferably straw, 10-30 wt% of waste from hydroponic farming.

2. Fuel according to claim 1, **characterized in that** it additionally contains 0-50 wt% of dust from milling all types of cereals and/or 30-50 wt% of dust from brewing industry and/or 0-10 wt% of dried fruit and/or dried flowers and/or dried vegetables past their expiration date and/or 5-15 wt% of substrate from mushroom growing and/or up to 25 wt% of pomace and other waste from plant produce processing and/or 5-8 wt% of tobacco waste and/or up to 5 wt% of cork waste.

3. Fuel according to claim 1, **characterized in that** the selected biodegradable municipal waste from mechanical processing of mixed municipal and/or industrial waste of cellulose products contains waste from sorting, from mechanical processing of paper, cardboard, paper and cardboard packaging, preferably not containing contaminants in the form of printing ink or impregnants.

4. Method of manufacture of solid fuel, particularly for the power industry, **characterized in that** up to 80 wt% of selected biodegradable municipal and/or industrial waste of fibrous materials from natural textiles and fibres, up to 80 wt% of selected municipal and/or industrial waste of cellulose products, 5-15 wt% of biodegradable phytomass waste from farming, preferably straw, 10-30 wt% of waste from hydroponic farming and/or 0-10 wt% of dried fruit and/or dried flowers and/or dried vegetables past their expiration date and/or up to 5-15 wt% of substrate from mushroom growing and/or 5-8 wt% of tobacco waste and/or up to 5 wt% of cork waste and/or up to 25 wt% of pomace and other waste from plant produce processing is subjected to mixing and size reduction, preferably down to 0.1 - 30 mm, and drying in a high-speed mill, after which to the thus obtained size-reduced mixture of biodegradable components placed in a milling and drying device 10-30 wt% of sifted stabilized fractions of biodegradable waste and/or 0-50 wt% of dust from milling of all types of cereals, and/or 30-50 wt% of dust from brewing industry is added and the whole composition is subjected to further mixing, drying, preferably to 11 - 12 % moisture content, and to size reduction, preferably to grain size of 0.1 to 10 mm, until a homogenous mixture is obtained, after which the obtained product is, if necessary, depending on the type of boiler where the fuel is to be used, subjected to the process of forming pellets or briquettes without introducing any additional binders.
